# EUROPÄISCHE PATENTSCHRIFT

(11) **EP 2 043 894 B1**
(45) Veröffentlichungstag und Bekanntmachung des Hinweises auf die Patenterteilung: **25.11.2009**
(21) Anmeldenummer: 07785983.3
(22) Anmeldetag: 10.07.2007
(51) Int. Cl.: B60T 7/12, B60T 8/00

(54) **VERFAHREN UND STEUERGERÄT ZUM RUCKFREIEN ANHALTEN EINES KRAFTFAHRZEUGES**
METHOD AND CONTROL DEVICE FOR STOPPING A MOTOR VEHICLE WITHOUT JOLTING
PROCÉDÉ ET APPAREIL DE COMMANDE POUR ARRÊTER UN VEHICULE AUTOMOBILE SANS CHOCS

(30) Priorität: 25.07.2006 DE 102006034357
(43) Veröffentlichungstag der Anmeldung: 08.04.2009
(73) Patentinhaber: Lucas Automotive GmbH, 56070 Koblenz (DE)
(72) Erfinder: KNECHTGES, Josef, 56727 Mayen (DE)
(74) Vertreter: Röthinger, Rainer
(86) Internationale Anmeldenummer: PCT/EP2007/006121
(87) Internationale Veröffentlichungsnummer: WO 2008/011983

(56) Entgegenhaltungen:
- DE-A1- 10 131 323
- DE-A1- 19 703 688

## Beschreibung

### Gebiet der Erfindung

Die Erfindung betrifft ein Verfahren zum ruckfreien Anhalten eines Kraftfahrzeuges sowie ein Steuergerät für ein solches Verfahren.

### Hintergrund der Erfindung

Die Funktionalität des ruckfreien Anhaltens ("SoftStop") eines Kraftfahrzeuges ist bisher nur bei sog. elektrohydraulischen Bremsanlagen realisiert worden.

Dokument DE 197 03 688 A1 offenbart ein Verfahren und Vorrichtung zum ruckfreien Anhalten eines Kraftfahrzeuges, wobei eine Summe der durch eine fußkraftbetätigbare Bremsanlage erzeugten, die Bremseinrichtungen des Kraftfahrzeuges beaufschlagenden Hydraulikfluiddrücke beim Anhaltevorgang in Abhängigkeit einer mit der Fahrzeuggeschwindigkeit in Beziehung stehende Größe fahrerunabhängig um 30% bis 70% verringert wird.

Dokument DE 101 31 323 A1 offenbart ein Verfahren und Vorrichtung zum ruckfreien Anhalten eines Kraftfahrzeuges.

Bei einer elektrohydraulischen oder fremdkraftbetätigbaren Bremsanlage wird der Fahrerwunsch am Bremspedal mittels Sensoren erfasst und in Form von elektrischen Signalen einer elektronischen Steuerung zugeführt, die einen elektrischen Bremsdruckgeber ansteuert ("brake-by-wire" Betrieb). Um das Fahrzeug auch bei einem Ausfall der Fahrzeugelektrik noch mit einer Mindestverzögerung abbremsen zu können, weist die elektrohydraulische Bremsanlage zusätzlich eine redundante hydraulische Notbremsfunktionalität auf, die unmittelbar und ohne jegliche elektronische Ansteuerung auf die Bremsen der Fahrzeugräder wirken kann. Bei dieser hydraulischen Notbremsfunktionalität wird in herkömmlicher Weise über einen fußkraftbetätigbaren Bremsdruckgeber sowie Hydraulikleitungen eine direkte Verbindung zwischen dem Bremspedal und den Radbremsen des Kraftfahrzeuges hergestellt ("push-through" Betrieb).

Bei der SoftStop-Funktionalität wird kurz vor Erreichen des Fahrzeugstillstandes der auf die Radbremsen wirkende Druck automatisch reduziert. Dadurch wird der bei Erreichen des Stillstandes des Kraftfahrzeuges auftretende Fahrzeugruck zumindest minimiert, weil die im Vergleich zur Gleitreibung höhere Haftreibung der Bremsbeläge durch einen niedrigeren Bremsdruck ausgeglichen wird. Bei einer elektrohydraulischen Bremsanlage ist im normalen "brake-by-wire" Betrieb der Fahrer von der Bremsanlage aufgrund des vorhandenen Simulationskolbens entkoppelt. Demnach macht sich die SoftStop-Funktionalität bei einer elektrohydraulischen Bremsanlage nicht an dem Ansprechverhalten des Bremspedals bemerkbar.

Es ist eine Aufgabe der vorliegenden Erfindung, eine SoftStop-Funktionalität bei einer fußkraftbetätigbaren Bremsanlage vorzusehen.

### Zusammenfassung der Erfindung

Zur Lösung der oben genannten Aufgabe sieht ein erster Aspekt der Erfindung ein Verfahren zum ruckfreien Anhalten eines Kraftfahrzeuges vor, bei dem eine Summe der durch eine fußkraftbetätigbare Bremsanlage erzeugten, die Bremseinrichtungen des Kraftfahrzeuges beaufschlagenden Hydraulikfluiddrücke beim Anhaltevorgang in Abhängigkeit einer mit der Fahrzeuggeschwindigkeit in Beziehung stehenden Größe fahrerunabhängig um 30 % bis 70 % verringert wird.

Durch die Verringerung der Summe der auf die Bremseinrichtungen wirkenden Hydraulikfluiddrücke in Abhängigkeit von einer mit der Fahrzeuggeschwindigkeit in Beziehung stehenden Größe kann der beim Erreichen des Stillstandes des Kraftfahrzeuges auftretende Fahrzeugruck spürbar verringert werden. Dies hängt auch damit zusammen, dass der Übergang von der Gleitreibung zu der im Vergleich zur Gleitreibung höheren Haftreibung der Bremsbeläge mittels der Hydraulikfluiddruckverringerung um 30% bis 70% ausgeglichen wird. Des Weiteren geschieht die Verringerung der die Bremseinrichtungen beaufschlagenden Hydraulikfluiddrücke vollständig automatisch, d.h. ohne Hinzutun des Fahrers. Vorzugsweise kann die Summe der Hydraulikfluiddrücke um 40 % bis 60 %, noch bevorzugter um 50 % verringert werden.

Gemäß einem Aspekt der Erfindung kann die Verringerung der Summe der Hydraulikfluiddrücke weiterhin von der dynamischen Achslastverteilung abhängen. Durch Einbeziehung der dynamischen Achslastverteilung kann bei starker Bremsverzögerung, oder bei Bremsmanövern auf abschüssigem Gelände, die im Vergleich zur Hinterachse stärker belastete Vorderachse dadurch entlastet werden, dass die auf die Bremseinrichtungen der Vorderräder wirkenden Hydraulikfluiddrücke stärker abgebaut werden als die auf die Bremseinrichtungen der Hinterräder wirkenden Hydraulikfluiddrücke.

Die mit der Fahrzeuggeschwindigkeit in Beziehung stehende Größe (z.B. eine Raddrehzahl oder die Fahrzeuggeschwindigkeit selbst) kann gemäß einem weiteren Aspekt der Erfindung mit einem Schwellwert verglichen werden. Somit werden z.B. bei Erreichen oder Unterschreiten eines Geschwindigkeitsschwellwerts oder eines Raddrehzahlschwellwerts die Summe der auf die Bremseinrichtungen des Kraftfahrzeuges wirkenden Hydraulikfluiddrücke verringert.

Nach einer weiteren Ausgestaltung können der eine Bremseinrichtung eines Vorderrades beaufschlagende Hydraulikfluiddruck und der eine Bremseinrichtung eines Hinterrades beaufschlagende Hydraulikfluiddruck verringert werden. Somit wird nur der auf zwei diagonal gegenüberliegende Bremseinrichtungen des Kraftfahrzeuges wirkende Hydraulikfluiddruck verringert (z.B. vollständig reduziert), während der Hydraulikfluiddruck der Bremseinrichtungen der beiden anderen Fahrzeugräder unverändert beibehalten wird und der Fahrer des Kraftfahrzeuges über diese beiden Bremseinrichtungen die Verzögerung des Kraftfahrzeuges während der SoftStop-Funktionalität weiterhin beeinflussen kann.

Wird das Bremsverfahren bei einem Kraftfahrzeug mit zwei diagonal verlaufenden Bremskreisen angewandt, d.h. bei einem Kraftfahrzeug, bei dem ein Bremskreis die Bremseinrichtung eines Vorderrades mit der Bremseinrichtung eines dazu diagonal gegenüberliegenden Hinterrades und ein anderer Bremskreis die Bremseinrichtung des anderen Vorderrades mit der Bremseinrichtung des anderen dazu diagonal gegenüberliegenden Hinterrads verbindet, kann in einem der beiden Bremskreise der Hydraulikfluiddruck verringert werden. Da der Hydraulikfluiddruck in lediglich einem Bremskreis verringert wird und in dem anderen Bremskreis unverändert aufrechterhalten wird, wird die Fahrzeugstabilität beim Abbremsen des Kraftfahrzeuges durch die SoftStop-Funktionalität nicht beeinträchtigt.

Nach einer weiteren Ausgestaltung der Erfindung kann der Hydraulikfluiddruck in der Bremseinrichtung eines Vorderrades und der Bremseinrichtung eines Hinterrades um 100% verringert werden, d.h. vollständig abgebaut werden. Dadurch verringert sich die Summe der von der fußkraftbetätigbaren Bremsanlage erzeugten und sämtliche Bremseinrichtungen des Kraftfahrzeuges beaufschlagenden Hydraulikfluiddrücke um 50 %.

Der Schwellwert kann vorbestimmt sein. Sobald beispielsweise die Geschwindigkeit des Kraftfahrzeuges den Schwellwert erreicht, wird der Hydraulikfluiddruck verringert. Der Geschwindigkeitsschwellwert kann in einem Bereich von 1-5 km/h, vorzugsweise in einem Bereich von 1-3 km/h liegen. Bei derartig niedrigen Geschwindigkeiten reicht der verringerte Hydraulikfluiddruck noch aus, um das Kraftfahrzeug sicher bis zum Erreichen des Stillstandes abzubremsen.

Alternativ zu einem vorbestimmten Schwellwert kann der Schwellwert von der Geschwindigkeit und/oder der Verzögerung des Kraftfahrzeuges abhängen. Wird das Kraftfahrzeug stark abgebremst, d.h. mit einer großen Bremsverzögerung, kann beispielsweise der Geschwindigkeitsschwellwert als Funktion der Verzögerung erhöht sein, da höhere Bremskräfte zum sicheren Abbremsen des Kraftfahrzeuges erforderlich sind und somit der bei Erreichen des Stillstandes des Kraftfahrzeuges auftretende Fahrzeugruck deutlicher ausgeprägt ist. Um dem entgegenzuwirken, wird der Hydraulikfluiddruck bereits bei Erreichen und/oder Unterschreiten des erhöhten Geschwindigkeitsschwellwerts verringert. Dadurch bleibt diejenige Zeitspanne gleich, während der die Bremsanlage mit verringertem Hydraulikfluiddruck betrieben wird, da die Bremsverzögerung in einem solchen Fall erhöht ist. Einem Abbremsen des Kraftfahrzeuges an einem Gefälle wird dadurch ebenso Rechnung getragen.

Weiterhin kann nach der Verringerung der Summe der Hydraulikfluiddrücke diese in Abhängigkeit eines weiteren Geschwindigkeitsschwellwerts des Kraftfahrzeuges erhöht werden. Vorzugsweise wird dieser weitere Geschwindigkeitsschwellwert bei Erreichen des Stillstandes des Kraftfahrzeuges erreicht. Bei oder nach Erreichen des Stillstandes kann der Hydraulikfluiddruck in den Bremseinrichtungen der Bremsanlage, in denen er zuvor verringert wurde, erneut erhöht werden, um die für den Stillstand erforderlichen Bremskräfte aufzubringen. Dies ist dahingehend von Vorteil, wenn das Fahrzeug beispielsweise an einem Gefälle zum Stillstand kommt.

Weiterhin kann die Summe der Hydraulikfluiddrücke auf einen vor dessen Verringerung in der Bremsanlage vorliegenden Wert erhöht werden. Diese zusätzliche Funktionalität stellt sicher, dass der gesamte Hydraulikfluiddruck und damit die gesamte Bremskraft der Bremsanlage bei oder nach Erreichen des Stillstandes des Kraftfahrzeuges wieder zur Verfügung steht und somit der vor Ansprechen der SoftStop-Funktionalität vorliegende Zustand wieder erreicht wird.

Während der Verringerung der Summe der Hydraulikfluiddrücke kann mindestens eine der Bremseinrichtungen in fluider Verbindung mit der Betätigungseinrichtung bleiben. In diesem Fall behält der Fahrer weiter unmittelbar die Kontrolle über den Bremsvorgang.

Ein zweiter Aspekt der vorliegenden Erfindung sieht ein Steuergerät zur Steuerung von Hydraulikfluiddrücken in einer fußkraftbetätigbaren Bremsanlage eines Kraftfahrzeuges vor, das eine Einrichtung aufweist zum Verringern einer Summe der durch eine fußkraftbetätigbare Bremsanlage erzeugten und die Bremseinrichtungen des Kraftfahrzeuges beaufschlagenden Hydraulikfluiddrücke in Abhängigkeit eines Geschwindigkeitsschwellwerts des Kraftfahrzeuges um 30 % bis 70 %. Dieses Steuergerät gewährleistet ein ruckfreies Anhalten eines Kraftfahrzeuges im Sinne des voranstehend beschriebenen Bremsverfahrens.

Weiterhin kann das Steuergerät eine Einrichtung aufweisen zum Erhöhen der Summe der Hydraulikfluiddrücke in Abhängigkeit eines weiteren Geschwindigkeitsschwellwerts des Kraftfahrzeuges. Bei Erreichen des weiteren Geschwindigkeitsschwellwerts wird die Summe der Hydraulikfluiddrücke erneut erhöht, wodurch die für den Stillstand des Kraftfahrzeuges notwendige Bremskraft wieder zur Verfügung steht.

Nach einer weiteren Ausgestaltung kann das Steuergerät ABS- und/oder ESP-fähig sein. Dadurch wird nicht nur die Funktionalität einer das Steuergerät aufweisenden Bremsanlage erhöht, sondern das Steuergerät kann die bereits existierenden ABS- und/oder ESP-fähigen Komponenten so ansteuern und untereinander verschalten, dass sie zur Ausführung des gemäß dem ersten Aspekt der Erfindung beschriebenen Verfahrens geeignet sind. Die Bereitstellungskosten einer solchen Bremsanlage werden dadurch deutlich verringert.

### Kurze Beschreibung der Zeichnungen

Die Erfindung wird im Anschluss anhand der beiliegenden Zeichnungen näher erläutert. Es zeigen:
- Fig. 1: eine schematische Darstellung einer Bremsanlage während eines Druckabbaus gemäß einer Ausführungsform des erfindungsgemäßen Bremsverfahrens;
- Fig. 2: eine schematische Darstellung der in Fig. 1 gezeigten Bremsanlage während eines Druckaufbaus gemäß einer Ausführungsform des erfindungsgemäßen Bremsverfahrens.

### Beschreibung einer bevorzugten Ausführungsform der Erfindung

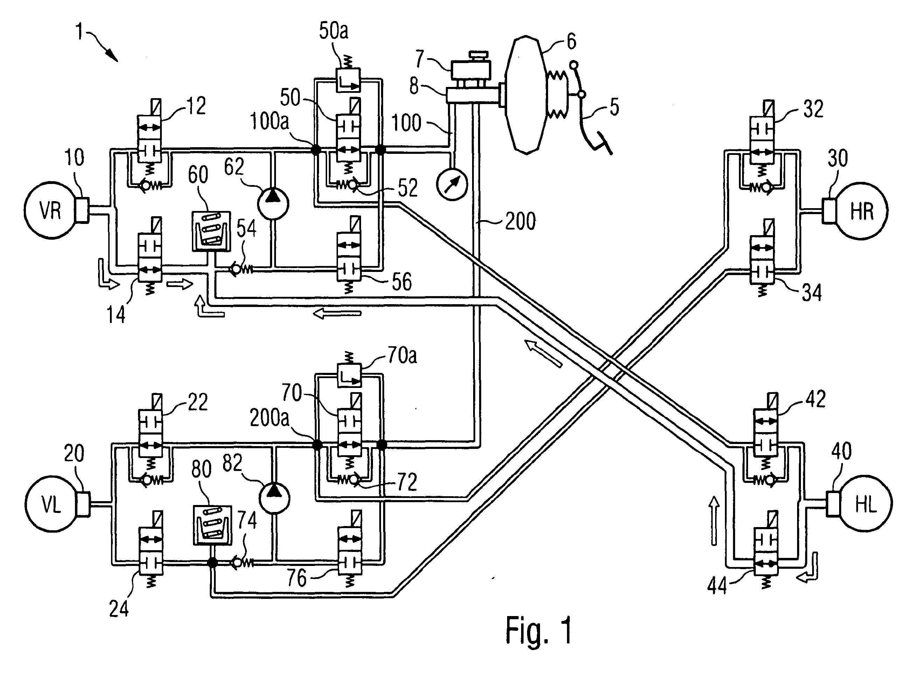

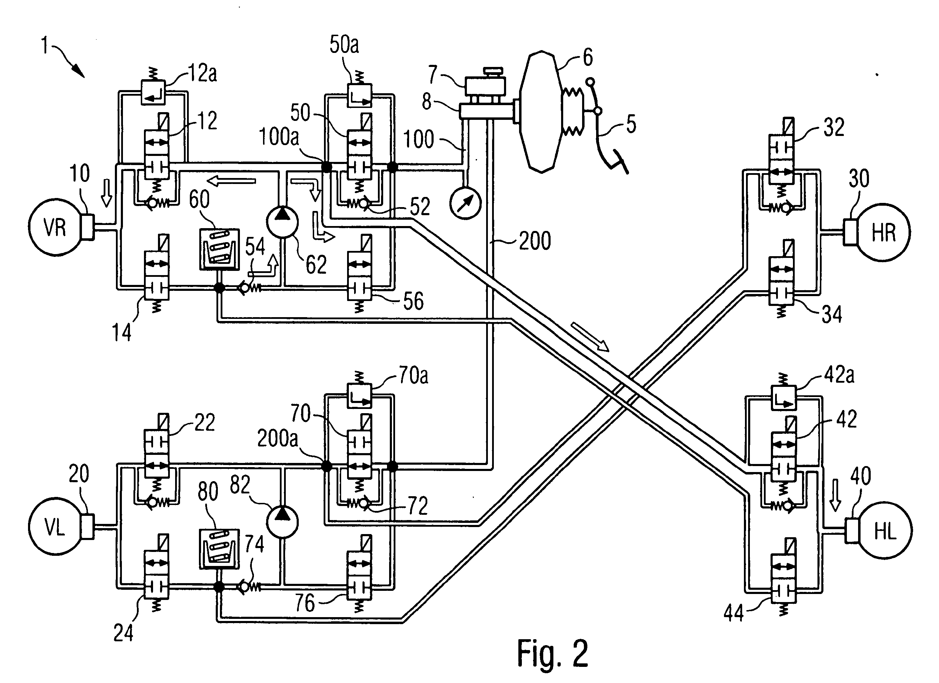

In der Fig. 1 und der Fig. 2 ist eine Ausführungsform eines in einer Bremsanlage 1 implementierten Steuergeräts schematisch dargestellt, das zur Ausführung des erfindungsgemäßen Verfahrens zum ruckfreien Anhalten eines Kraftfahrzeuges geeignet ist. In beiden Darstellungen weisen gleiche Bezugszeichen auf identische Bauteile der Bremsanlage 1 hin. Da die Fig. 1 und die Fig. 2 zwei unterschiedliche Betriebszustände der gleichen Bremsanlage 1 darstellen, wird der Aufbau sowie die einzelnen Bauteile der Bremsanlage 1 nur anhand der Fig. 1 beschrieben.

Die in der Fig. 1 dargestellte Bremsanlage 1 weist zwei diagonal verlaufende Bremskreise 100, 200 auf. Der Bremskreis 100 verbindet die Bremseinrichtung 10 des vorderen rechten Fahrzeugrades und die Bremseinrichtung 40 des hinteren linken Fahrzeugrades mit einer fußkraftbetätigbaren Einrichtung 5, 6, 7, 8 zur Bereitstellung von unter Druck stehendem Hydraulikfluid. Der Bremskreis 200 verbindet die Bremseinrichtung 20 des vorderen linken Fahrzeugrades und die Bremseinrichtung 30 des hinteren rechten Fahrzeugrades mit der Einrichtung 5, 6, 7, 8. Durch die diagonale Verteilung der Bremskreise 100, 200 wird die Kraftfahrzeugstabilität sowie die Fahrzeugdynamik in bestimmten Situationen verbessert, beispielsweise wenn sich die Fahrspur der rechten Fahrzeugräder auf nasser Fahrbahn und die Fahrzeugspur der linken Fahrzeugräder auf trockener Fahrbahn befinden.

Die Bremsanlage 1 weist, wie bereits erwähnt, eine fußkraftbetätigbare Einrichtung 5, 6, 7, 8 zur Bereitstellung von unter Druck stehendem Hydraulikfluid auf. Diese Einrichtung umfasst ein Bremspedal 5, einen Bremskraftverstärker 6 sowie einen dem Bremskraftverstärker 6 nachgeschalteten und mit einem Reservoir 7 für Hydraulikfluid verbundenen Hauptbremszylinder 8.

Mit Ausnahme der fußkraftbetätigbaren Einrichtung 5, 6, 7, 8 sind sämtliche Komponenten der im Anschluss im Detail beschriebenen Bremsanlage 1 in einem Steuergerät enthalten. Dieses Steuergerät steuert die Summe der von der Einrichtung 5, 6, 7, 8 erzeugten Hydraulikfluiddrücke, mit denen die Bremseinrichtungen 10, 20, 30, 40 der Fahrzeugräder beaufschlagt werden.

Beide Bremskreise 100, 200 enthalten Komponenten, die normalerweise bei ABS- und/oder ESP-fähigen Bremsanlagen verwendet werden. So ist in dem Bremskreis 100 dem Hauptbremszylinder 8 ein elektromagnetisch betätigbares, im stromlosen Zustand geöffnetes Steuerventil 50 nachgeschaltet. Diesem Steuerventil 50 ist ein parallel dazu geschaltetes Rückschlagventil 52 zugeordnet, welches eine Förderung von Hydraulikfluid aus dem Reservoir 7 zu der Bremseinrichtung 10 und der Bremseinrichtung 40 ermöglicht, und zwar in dem Fall, wenn das Steuerventil 50 vom geschlossenen Zustand nicht mehr in den geöffneten Zustand aufgrund einer Funktionsstörung umgeschaltet werden kann. Ferner ist mit dem Bezugszeichen 50a die Möglichkeit einer Pulsweitenmodulation (PWM) des Steuerventils 50 angedeutet, die im vorliegend beschriebenen Ausführungsbeispiel einen Durchlass von Hydraulikfluid durch das Steuerventil zurück zum Reservoir 7 ermöglicht, falls der Hydraulikfluiddruck stromabwärts des Steuerventils 50 den Druck im Hauptbremszylinder 8 (z.B. 50 bar) um beispielsweise mehr als 10 bar überschreitet.

Im zweiten diagonal verlaufenden Bremskreis 200 ist ebenso dem Hauptbremszylinder 8 ein Steuerventil 70 nachgeschaltet, dem parallel dazu ein Rückschlagventil 72 zugeordnet ist. Des Weiteren kann das Steuerventil 70 pulsweitenmoduliert werden, wie durch das Bezugszeichen 72a angedeutet ist.

Jeder Bremseinrichtung 10, 20, 30, 40 ist ein Einlassventil 12, 22, 32, 42 sowie ein Auslassventil 14, 24, 34, 44 zugeordnet. Die Einlassventile 12, 22, 32, 42 sind elektromagnetisch betätigbare, im stromlosen Zustand geöffnete Steuerventile, während die Auslassventile 14, 24, 34, 44 elektromagnetisch betätigbare, im stromlosen Zustand geschlossene Steuerventile sind.

In beiden Bremskreisen 100, 200 ist den Auslassventilen 14, 24, 34, 44 ein Druckspeicher 60, 80 nachgeschaltet. Stromabwärts des Druckspeichers 60, 80 ist ein Rückschlagventil 54, 74 angeordnet. Zur Druckerhöhung in den Bremskreisen 100, 200 ist eine Pumpe 62, 82 vorgesehen, die Hydraulikfluid aus dem Druckspeicher 60, 80 durch die Einlassventile 12, 22, 32, 42 zu den Bremseinrichtungen 10, 20, 30, 40 fördern kann. Stromabwärts der Steuerventile 50, 70 sind Verzweigungspunkte 100a, 200a in den jeweiligen Bremskreisen 100, 200 vorgesehen. Diese Verzweigungspunkte 100a, 200a ermöglichen bei Betätigung des Bremspedals 5, dass Hydraulikfluid aus dem Hauptbremszylinder 8 durch die Steuerventile 50, 70 hindurch gleichzeitig zu den jeweiligen Bremseinrichtungen 10, 20 eines Vorderrades und den Bremseinrichtungen 30, 40 eines Hinterrades gefördert werden kann.

In beiden Bremskreisen 100, 200 ist jeweils eine Pumpe 62, 82 vorgesehen, die Hydraulikfluid aus den jeweiligen Druckspeichern 60, 80 den Bremseinrichtungen 10, 40 und 20, 30 zuführt. Die Pumpen 62, 82 sind bei der hier dargestellten Ausführungsform beispielsweise als Radialkolbenpumpen ausgestaltet, die über einen gemeinsamen Exzenter miteinander gekoppelt sind.

Ferner sind in beiden Bremskreisen 100, 200 jeweils stromabwärts der Rückschlagventile 54, 74 elektromagnetisch betätigbare Steuerventile 56, 76 angeordnet, die bei Betätigung der Pumpen 62, 82 geschlossen gehalten werden, um so sicherzustellen, dass die Pumpen 62, 82 lediglich Hydraulikfluid aus den Druckspeichern 60, 80 den jeweiligen Bremseinrichtungen 10, 40 und 20, 30 zuführen. Sollte beispielsweise die in dem Druckspeicher 60 vorhandene Menge an Hydraulikfluid für den Druckaufbau in den Bremseinrichtungen 10, 40 nach Erreichen des Fahrzeugstillstandes nicht ausreichen, so kann das Steuerventil 56 kurzzeitig geöffnet werden, wodurch die Pumpe 62 Hydraulikfluid aus dem Hauptbremszylinder zu den Bremseinrichtungen 10, 40 fördern kann.

Im folgenden wird die Funktionsweise der Bremsanlage in Hinblick auf das ruckfreie Anhalten (SoftStop-Funktionalität) eines Kraftfahrzeuges beschrieben. Die Fig. 1 beschreibt eine erste Phase, den Druckabbau, und die Fig. 2 beschreibt eine optionale zweite Phase, den anschließenden Druckaufbau, der SoftStop-Funktionalität.

Zu diesem Zweck wird, wie in der Fig. 1 dargestellt ist, der Hydraulikfluiddruck kurz vor Erreichen des Fahrzeugstillstandes in der Bremseinrichtung 10 des vorderen rechten Fahrzeugrades und der Bremseinrichtung 40 des hinteren linken Fahrzeugrades vollständig abgebaut, d.h. die Summe der von der Einrichtung 5, 6, 7, 8 erzeugten und auf die Bremseinrichtungen 10, 20, 30, 40 wirkenden Hydraulikfluiddrücke wird um 50% reduziert. Der Zeitpunkt, zu dem der in der Bremsanlage 1 erzeugte Hydraulikfluiddruck verringert wird, wird von einer mit der Fahrzeuggeschwindigkeit in Beziehung stehenden Größe bestimmt. Diese mit der Fahrzeuggeschwindigkeit in Beziehung stehenden Größe ist bei der hier beschriebenen Ausführungsform die Fahrzeuggeschwindigkeit selbst, die mit einem Geschwindigkeitsschwellwert verglichen wird, der im Bereich von ungefähr 1-5 km/h liegt. Sobald die Fahrzeuggeschwindigkeit den Geschwindigkeitswert erreicht und/oder unterschritten hat, wird die Summe der die Bremseinrichtungen des Kraftfahrzeuges beaufschlagenden Hydraulikfluiddrücke verringert.

Es ist ebenso denkbar, diesen Geschwindigkeitsschwellwert von der Bremsverzögerung des Kraftfahrzeuges abhängig zu machen, um so einen variablen Geschwindigkeitsschwellwert zu bestimmen. Durch den variablen Geschwindigkeitsschwellwert bleibt die Zeitspanne zwischen dem Beginn der Verringerung des Hydraulikfluiddruckes und dem tatsächlichen Erreichen des Stillstandes des Kraftfahrzeuges bei unterschiedlichen Bremsverzögerungen gleich. Dies kann beispielsweise dann von Vorteil sein, wenn die Bremsverzögerung des Kraftfahrzeuges entsprechend hoch ist, z.B. bei starkem Abbremsen des Kraftfahrzeuges, oder wenn das Kraftfahrzeug an einem Gefälle zum Stillstand gebracht werden soll.

Zur Verringerung des Drucks werden die Einlassventile 12, 42 geschlossen und die Auslassventile 14, 44 geöffnet. Durch Öffnen der Auslassventile 14, 44 kann Hydraulikfluid aus den Bremseinrichtungen 10, 40 zurück zum Druckspeicher 60 strömen, wodurch der Bremsdruck in den Bremseinrichtungen 10, 40 verringert wird. Das Rückschlagventil 54 verhindert dabei, dass das zurückströmende Hydraulikfluid in andere Bereiche des Bremskreises 100 gelangt. Der Druckspeicher 60 wird dadurch mit Hydraulikfluid beaufschlagt, das dann in einer späteren Phase wieder zur Verfügung steht. Dadurch, dass der Hydraulikfluiddruck lediglich in dem Bremskreis 100 abgebaut wird, kann der Fahrer des Kraftfahrzeuges weiterhin die Verzögerung des Kraftfahrzeuges durch Betätigung des Bremspedals 5 über den Bremskreis 200 beeinflussen. Das Bremspedal 5 ist somit nicht hart, so wie es der Fall wäre, wenn sämtliche Einlassventile 12, 22, 32, 42 beider Bremskreise 100, 200 geschlossen wären und der Fahrer dadurch überhaupt keinen Einfluss auf die Verzögerung des Kraftfahrzeuges mehr hätte. Das Ansprechverhalten des Bremspedals 5 ist damit im Vergleich zum normalen Betrieb des Kraftfahrzeuges unverändert. Damit steht dem Fahrer weiterhin ein in Kraft und Pedalweg modulierbares Bremspedal 5 zur Verfügung.

Bezugnehmend auf die Fig. 2 ist die optionale zweite Phase der SoftStop-Funktionalität dargestellt, während der im Anschluss an den Druckabbau der ersten Phase der Hydraulikfluiddruck erneut in den Bremseinrichtungen 10, 40 erhöht wird. Zu diesem Zweck wird das Steuerventil 50 sowie die Auslassventile 14, 44 geschlossen. Wird im Anschluss die Pumpe 62 betätigt, wird Hydraulikfluid aus dem Druckspeicher 60 durch das Rückschlagventil 54 und durch das pulsweitenmodulierte Einlassventil 12, 42 zu den Bremseinrichtungen 10, 40 gefördert. Durch die Pulsweitenmodulation der Einlassventile 12, 42 wird erreicht, dass der Hydraulikfluiddruck stromabwärts des Steuerventils 50, d. h. in Richtung der Einlassventile 12, 42, erhöht ist und somit das Rückschlagventil 52 geschlossen bleibt, da stromaufwärts des Rückschlagventils 54 ein Hydraulikfluiddruck in Höhe des Druckes in dem Hauptbremszylinder 8 herrscht.

Durch die Pulsweitenmodulation der Einlassventile 12, 42 sollte der Druck in dem Bereich stromabwärts des Steuerventils 50 um ungefähr 5 bar höher sein als der Hydraulikfluiddruck im Hauptbremszylinder 8 (z.B. 50 bar). Durch das geschlossen gehaltene Rückschlagventil 52 wird vermieden, dass Hydraulikfluid aus dem Hauptbremszylinder 8 durch das Rückschlagventil 52 und vorbei an dem Steuerventil 50 in die Bremseinrichtungen 10, 40 gelangt, was zu einem "durchfallenden" Bremspedal 5 führen würde.

Ferner wird das Steuerventil 50 mit einer Pulsweitenmodulation 50a betrieben, die im Falle eines Überdruckes stromabwärts des Steuerventils 50 ermöglicht, dass das Hydraulikfluid durch das Steuerventil 50 zurück zum Hauptbremszylinder 8 gelangen kann. Bei der hier dargestellten Ausführungsform der Bremsanlage wird Hydraulikfluid durch das Steuerventil 50 hindurchgelassen, falls der Druck stromabwärts des Steuerventils 50 den Druck im Hauptbremszylinder 8 um mehr als 10 bar übersteigt.

Als Sicherheitsmerkmal der hier dargestellten Bremsanlage 1 ist vorgesehen, dass der Fahrer zu jedem Zeitpunkt verhindern kann, dass die SoftStop-Funktionalität anspricht. Zu diesem Zweck wird das Bremspedal übertreten, d.h. das Bremspedal wird bis zu einer Stellung durchgetreten, an der das Steuergerät erkennt, dass die SoftStop-Funktionalität vom Fahrer nicht erwünscht ist.

Die Fahrzeuggeschwindigkeit kann, wie voranstehend beschrieben, mit einem Geschwindigkeitsschwellwert verglichen werden, der wiederum von der Verzögerung des Fahrzeuges abhängen kann. Weiterhin ist denkbar, dass die mit der Fahrzeuggeschwindigkeit in Beziehung stehende Größe die Raddrehzahl ist, die mit einem Drehzahlschwellwert verglichen werden kann. Unabhängig davon, ob die mit der Fahrzeuggeschwindigkeit in Beziehung stehende Größe mit einem Geschwindigkeitsschwellwert oder mit einem Raddrehzahlschwellwert verglichen wird, kann die Verringerung der Summe der Hydraulikfluiddrücke weiterhin von der dynamischen Achslastverteilung abhängig sein. Durch Einbeziehung der dynamischen Achslastverteilung kann bei starker Bremsverzögerung, oder bei Bremsmanövern auf abschüssigem Gelände, die im Vergleich zur Hinterachse stärker belastete Vorderachse dadurch entlastet werden, dass der auf die Bremseinrichtungen der Vorderräder wirkende Hydraulikfluiddruck stärker abgebaut wird als der auf die Bremseinrichtungen der Hinterräder wirkende Hydraulikfluiddruck. Mit anderen Worten, die Fahrzeugräder der Hinterachse werden im Vergleich zu den Fahrzeugrädern der Vorderachse stärker abgebremst.

Der Fachmann erkennt, das verschiedene Modifikationen an der in der Fig. 1 und der Fig. 2 dargestellten Bremsanlage vorgenommen werden können. So können beispielsweise die einzelnen Bremskreise 100, 200 die Bremseinrichtungen 10, 30 der rechten Fahrzeugräder sowie die Bremseinrichtungen 20, 40 der linken Fahrzeugräder mit der Einrichtung 5, 6, 7, 8 zur Bereitstellung von unter Druck stehendem Hydraulikfluid verbinden. Es ist ebenso denkbar, dass die hier dargestellten Einlassventile 12, 22, 32, 42 und die Auslassventile 14, 24, 34, 44, die 2/2-Magnetventilen entsprechen, durch 3/3-Magnetventile ersetzt werden können. Somit könnte ein einziges 3/3-Magnetventil die Funktion eines der Einlassventile 12, 22, 32, 42 und eines der Auslassventile 14, 24, 34, 44 übernehmen.

## Patentansprüche

1. Verfahren zum ruckfreien Anhalten eines Kraftfahrzeuges, bei dem eine Summe der durch eine Betätigungseinrichtung (5, 6, 7, 8) einer fußkraftbetätigbaren Bremsanlage (1) erzeugten, die Bremseinrichtungen (10, 20, 30, 40) des Kraftfahrzeuges beaufschlagenden Hydraulikfluiddrücke beim Anhaltevorgang in Abhängigkeit einer mit der Fahrzeuggeschwindigkeit in Beziehung stehenden Größe fahrerunabhängig um 30% bis 70% verringert wird, und bei dem während der Verringerung der Summe der Hydraulikfluiddrücke mindestens eine Bremseinrichtung (10, 20, 30, 40) in fluider Verbindung mit der Betätigungseinrichtung (5, 6, 7, 8) bleibt.

2. Verfahren nach Anspruch 1, **dadurch gekennzeichnet, dass** die Summe der Hydraulikfluiddrücke zusätzlich in Abhängigkeit einer dynamischen Achslastverteilung der Fahrzeugachsen des Kraftfahrzeuges verringert wird.

3. Verfahren nach Anspruch 1 oder 2, **dadurch gekennzeichnet, dass** die mit der Fahrzeuggeschwindigkeit in Beziehung stehende Größe mit einem Schwellwert verglichen wird.

4. Verfahren nach Anspruch 3, **dadurch gekennzeichnet, dass** der Schwellwert ein Geschwindigkeitsschwellwert ist und in einem Bereich von 1-5 km/h, insbesondere in einem Bereich von 1-3 km/h, liegt.

5. Verfahren nach Anspruch 4, **dadurch gekennzeichnet, dass** der Geschwindigkeitsschwellwert von der Geschwindigkeit und/oder der Bremsverzögerung des Kraftfahrzeuges abhängt.

6. Verfahren nach einem der vorhergehenden Ansprüche, **dadurch gekennzeichnet, dass** die Summe der Hydraulikfluiddrücke um 40% bis 60%, insbesondere um 50%, verringert wird.

7. Verfahren nach einem der vorhergehenden Ansprüche, **dadurch gekennzeichnet, dass** der eine Bremseinrichtung (10) eines Vorderrades beaufschlagende Hydraulikfluiddruck und der eine Bremseinrichtung (40) eines Hinterrades beaufschlagende Hydraulikfluiddruck verringert wird.

8. Verfahren nach einem der vorhergehenden Ansprüche, **dadurch gekennzeichnet, dass** bei einem Kraftfahrzeug mit zwei diagonal verlaufenden Bremskreisläufen (100, 200) in einem Bremskreislauf (100) der Hydraulikfluiddruck verringert wird.

9. Verfahren nach Anspruch 7 oder 8, **dadurch gekennzeichnet, dass** der Hydraulikfluiddruck um 100% verringert wird.

10. Verfahren nach einem der vorhergehenden Ansprüche, **dadurch gekennzeichnet, dass** nach der Verringerung der Summe der Hydraulikfluiddrücke die Summe wieder erhöht wird.

11. Verfahren nach Anspruch 10, **dadurch gekennzeichnet, dass** die Erhöhung bei Erreichen des Stillstandes des Kraftfahrzeuges durchgeführt wird.

12. Verfahren nach Anspruch 10 oder 11, **dadurch gekennzeichnet, dass** die Summe der Hydraulikfluiddrücke auf einen vor deren Verringerung in der Bremsanlage vorliegenden Wert erhöht wird.

13. Steuergerät zur Steuerung von Hydraulikfluiddrücken in einer fußkraftbetätigbaren Bremsanlage (1) eines Kraftfahrzeuges, mit einer Einrichtung (14, 44, 60) zum Verringern einer Summe der durch eine Betätigungseinrichtung (5, 6, 7, 8) einer fußkraftbetätigbaren Bremsanlage (1) erzeugten, die Bremseinrichtungen (10, 20, 30, 40) des Kraftfahrzeuges beaufschlagenden Hydraulikfluiddrücke in Abhängigkeit einer mit der Fahrzeuggeschwindigkeit in Beziehung stehenden Größe um 30% bis 70% derart, dass während der Verringerung der Summe der Hydraulikfluiddrücke mindestens eine Bremseinrichtung (10, 20, 30, 40) in fluider Verbindung mit der Betätigungseinrichtung (5, 6, 7, 8) bleibt.

14. Steuergerät nach Anspruch 13, des Weiteren mit einer Einrichtung (12, 42, 62) zum Erhöhen der Summe der Hydraulikfluiddrücke.

15. Steuergerät nach Anspruch 13 oder 14, das ABS- und/oder ESP-fähig ist.

## Claims

1. A method of stopping a motor vehicle without jolting, wherein a sum of the hydraulic fluid pressures generated by a foot-force-actuable brake system (1) and acting upon the braking devices (10, 20, 30, 40) of the motor vehicle during the stopping operation is reduced in a driver-independent manner by 30% to 70% in dependence upon a variable that is related to the vehicle velocity, and wherein during the reduction of the sum of the hydraulic fluid pressures at least one braking device (10, 20, 30, 40) remains in fluidic connection with the actuating device (5, 6, 7, 8).

2. The method according to claim 1, **characterized in that** the sum of the hydraulic fluid pressures is reduced additionally in dependence upon a dynamic axle load distribution of the vehicle axles of the motor vehicle.

3. The method according to claim 1 or 2, **characterized in that** the variable that is related to the vehicle velocity is compared with a threshold value.

4. The method according to claim 3, **characterized in that** the threshold value is a velocity threshold value and lies in a range of 1-5 km/h, in particular in a range of 1-3 km/h.

5. The method according to one of claims 4, **characterized in that** the velocity threshold value is dependent upon the velocity and/or the braking deceleration of the motor vehicle.

6. The method according to one of the preceding claims, **characterized in that** the sum of the hydraulic fluid pressures is reduced by 40% to 60%, in particular reduced by 50%.

7. The method according to one of the preceding claims, **characterized in that** the hydraulic fluid pressure acting upon a braking device (10) of a front wheel and the hydraulic fluid pressure acting upon a braking device (40) of a rear wheel is reduced.

8. The method according to one of the preceding claims, **characterized in that** in a motor vehicle having two diagonally extending brake circuits (100, 200) the hydraulic fluid pressure is reduced in one brake circuit (100).

9. The method according to claim 7 or 8, **characterized in that** the hydraulic fluid pressure is reduced by 100%.

10. The method according to one of the preceding claims, **characterized in that** after the reduction of the sum of the hydraulic fluid pressures the sum is increased again.

11. The method according to claim 10, **characterized in that** the increase is carried out upon attainment of the stationary state of the motor vehicle.

12. The method according to claim 10 or 11, **characterized in that** the sum of the hydraulic fluid pressures is increased to a value that existed before they were reduced in the brake system.

13. A control unit for controlling hydraulic fluid pressures in a foot-force-actuable brake system (1) of a motor vehicle, with a device (14, 44, 60) for reducing a sum of the hydraulic fluid pressures generated by the foot-force-actuable brake system (1) and acting upon the braking devices (10, 20, 30, 40) of the motor vehicle by 30% to 70% in dependence upon a variable related to the vehicle velocity in such a way that during the reduction of the sum of the hydraulic fluid pressures at least one braking device (10, 20, 30, 40) remains in fluidic connection with the actuating device (5, 6, 7, 8).

14. The control unit according to claim 13, further comprising a device (12, 42, 62) for increasing the sum of the hydraulic fluid pressures.

15. The control unit according to claim 13 or 14, which is ABS- and/or ESP-capable.

## Revendications

1. Procédé pour arrêter un véhicule automobile sans choc, dans le cadre duquel une somme des pressions de fluide hydraulique agissant sur les dispositifs de freinage (10, 20, 30, 40) du véhicule automobile et produites par un dispositif d'actionnement (5, 6, 7, 8) d'une installation de freinage (1) pouvant être commandée par la force du pied, est réduite de 30 à 70% indépendamment du conducteur lors de l'opération d'arrêt du véhicule en fonction d'une valeur en rapport avec la vitesse du véhicule, et dans le cadre duquel au moins un dispositif de freinage (10, 20, 30, 40) reste en liaison fluidique avec le dispositif d'actionnement (5, 6, 7, 8) pendant la réduction de la somme des pressions de fluide hydraulique.

2. Procédé selon la revendication 1, **caractérisé en ce que** la somme des pressions de fluide hydraulique est réduite également en fonction d'une répartition dynamique de la charge sur les essieux du véhicule.

3. Procédé selon la revendication 1 ou 2, **caractérisé en ce que** la valeur en rapport avec la vitesse du véhicule est comparée à une valeur seuil.

4. Procédé selon la revendication 3, **caractérisé en ce que** la valeur seuil est une valeur seuil de vitesse et varie dans une plage comprise entre 1 et 5 km/h, en particulier dans une plage comprise entre 1 et 3 km/h.

5. Procédé selon la revendication 4, **caractérisé en ce que** la valeur seuil de vitesse dépend de la vitesse et/ou du freinage du véhicule automobile.

6. Procédé selon l'une des revendications précédentes, **caractérisé en ce que** la somme des pressions de fluide hydraulique est réduite de 40 à 60%, en particulier de 50%.

7. Procédé selon l'une des revendications précédentes, **caractérisé en ce que** la pression de fluide hydraulique agissant sur un dispositif de freinage (10) d'une roue avant et la pression de fluide hydraulique agissant sur un dispositif de freinage (40) d'une roue arrière sont réduites.

8. Procédé selon l'une des revendications précédentes, **caractérisé en ce que**, sur un véhicule automobile équipé de deux circuits de freinage (100, 200) s'étendant en diagonale, la pression de fluide hydraulique est réduite dans un circuit de freinage (100).

9. Procédé selon la revendication 7 ou 8, **caractérisé en ce que** la pression de fluide hydraulique est réduite de 100%.

10. Procédé selon l'une des revendications précédentes, **caractérisé en ce que** la somme des pressions de fluide hydraulique est augmentée à nouveau après que la somme a été réduite.

11. Procédé selon la revendication 10, **caractérisé en ce que** l'augmentation est opérée lorsqu'est obtenu l'arrêt du véhicule.

12. Procédé selon la revendication 10 ou 11, **caractérisé en ce que** la somme des pressions de fluide hydraulique est augmentée pour passer à une valeur existante dans l'installation de freinage avant la réduction desdites pressions.

13. Appareil de commande pour commander des pressions de fluide hydraulique dans une installation de freinage (1) de véhicule automobile pouvant être commandée par la force du pied et comportant un dispositif (14, 44, 60) qui, en fonction d'une valeur en rapport avec la vitesse du véhicule, sert à réduire de 30 à 70% une somme des pressions de fluide hydraulique agissant sur les dispositifs de freinage (10, 20, 30, 40) du véhicule automobile et produites par un dispositif d'actionnement (5, 6, 7, 8) d'une installation de freinage (1) pouvant être commandée par la force du pied, de telle sorte qu'au moins un dispositif de freinage (10, 20, 30, 40) reste en liaison fluidique avec le dispositif d'actionnement (5, 6, 7, 8) pendant la réduction de la somme des pressions de fluide hydraulique.

14. Appareil de commande selon la revendication 13, comportant en outre un dispositif (12, 42, 62) servant à augmenter la somme des pressions de fluide hydraulique.

15. Appareil de commande selon la revendication 13 ou 14, lequel est compatible avec un système ABS et/ou un équipement ESP.
